# FASCICULE DE BREVET EUROPEEN

(11) **EP 2 701 005 B1**
(45) Date de publication et mention de la délivrance du brevet: **07.09.2016**
(21) Numéro de dépôt: 13179132.9
(22) Date de dépôt: 02.08.2013
(51) Int. Cl.: G03F 1/72, G03F 1/22, G03F 1/24

(54) **Procédé de fabrication de masques EUV minimisant l'impact des défauts de substrat**
Herstellungsverfahren von EUV-Masken, die den Einfluss von Substratdefekten minimieren
Method for producing EUV masks minimising the impact of substrate defects

(30) Priorité: 20.08.2012 FR 1257892
(43) Date de publication de la demande: 26.02.2014
(73) Titulaire: COMMISSARIAT A L'ENERGIE ATOMIQUE ET AUX ENERGIES ALTERNATIVES, 75015 Paris (FR)
(72) Inventeur: Vannuffel, Cyril, 38100 GRENOBLE (FR); Imbert, Jean-Louis, 38170 SEYSSINET (FR)
(74) Mandataire: Bréda, Jean-Marc

(56) Documents cités:
- CHRIS H CLIFFORD ET AL: "Compensation methods for buried defects in extreme ultraviolet lithography masks", PROCEEDINGS OF SPIE, S P I E - INTERNATIONAL SOCIETY FOR OPTICAL ENGINEERING, US, vol. 7636, 21 février 2010 (2010-02-21), pages 763623-1, XP002659238, ISSN: 0277-786X, DOI: 10.1117/12.846671
- HONGBO ZHANG ET AL: "Efficient pattern relocation for EUV blank defect mitigation", DESIGN AUTOMATION CONFERENCE (ASP-DAC), 2012 17TH ASIA AND SOUTH PACIFIC, IEEE, 30 janvier 2012 (2012-01-30), pages 719-724, XP032127196, DOI: 10.1109/ASPDAC.2012.6165049 ISBN: 978-1-4673-0770-3
- DU Y. ET AL.: "EUV mask preparation considering blank defects mitigation", SPIE PROC., vol. 8166, 19 septembre 2011 (2011-09-19), XP002697578, DOI: 10.1117/12.896996
- DU Y. ET AL.: "Efficient multi-die placement for blank defect mitigation in EUV lithography", SPIE PROC., vol. 8322, 12 février 2012 (2012-02-12), XP002697579, DOI: 10.1117/12.918075

## Description

L'invention concerne la fabrication des masques destinés à la photolithographie en extrême ultraviolet (EUV). Les longueurs d'onde considérées sont inférieures à 20 nanomètres et sont typiquement de 13,5 nm ou 6,8 nanomètres. Elle peut aussi s'appliquer à n'importe quelle longueur d'onde. L'utilisation de ces longueurs d'onde est destinée à réaliser des motifs de plus petites dimensions que ceux que permet la photolithographie en lumière visible ou en ultraviolet profond (DUV) .

La particularité des masques EUV est qu'ils sont utilisés en réflexion et non en transmission. Ils sont réfléchissants pour la longueur d'onde EUV utile, c'est-à-dire celle qui sera utilisée pour les opérations de photolithographie avec ce masque. Les masques EUV binaires portent par ailleurs un motif de zones absorbantes pour la longueur d'onde EUV utile. Des masques EUV à décalage de phase portent un motif de zones déphasantes. Pour simplifier les explications, on considérera dans la suite que les masques sont des masques binaires, bien que l'invention s'applique aussi aux masques à décalage de phase.

En utilisation, le masque est éclairé par une lumière EUV et réfléchit ce rayonnement, sauf dans les zones absorbantes où la lumière est absorbée et ne peut pas être renvoyée. L'éclairement EUV à une longueur d'onde bien déterminée est modulé spatialement par ce motif et est projeté par une optique de focalisation à miroirs sur une surface à exposer. La surface à exposer est une couche de résine sensible aux EUV, déposée sur un substrat plan. Cette couche recouvre les couches qu'on veut graver ou traiter (par exemple implanter) après exposition de la résine au rayonnement EUV. Après développement chimique de la résine, on aboutit à une structure dans laquelle les couches à graver ou à implanter sont recouvertes d'un motif de résine qui protège certaines zones et découvre d'autres zones.

L'optique de projection réduit l'image et permet de définir dans la résine des motifs plus petits que ceux qui sont gravés sur le masque. Le rapport de réduction est en général de quatre. Le masque est fabriqué en général à partir d'un procédé d'écriture par faisceau électronique.

Typiquement, un masque en réflexion de type masque binaire est composé d'un substrat plan à faible coefficient de dilatation, recouvert d'une structure réfléchissante, en pratique un miroir de Bragg c'est-à-dire une structure à multiples couches transparentes d'indices de réfraction différents. Les épaisseurs de ces couches sont calculées en fonction des indices, de la longueur d'onde, et de l'angle d'incidence du faisceau EUV, pour que les différentes interfaces, partiellement réfléchissantes, renvoient des ondes lumineuses en phase les unes avec les autres. Le miroir est recouvert d'une couche absorbante gravée selon le motif de masquage désiré, de sorte que le masque comprend des zones réfléchissantes (le miroir non recouvert d'absorbant) et des zones absorbantes (le miroir recouvert d'absorbant). A titre d'exemple, pour une longueur d'onde de 13,5 nm et un angle d'incidence de 6 degrés, on utilisera des couches de silicium d'épaisseur 41,5 angströms (1 angström = 0,1 nm) alternées avec des couches de molybdène d'épaisseur 28 angströms. Les zones absorbantes peuvent être constituées de chrome (entre autres) déposé sur le miroir ; par exemple une couche de 600 angströms de chrome placée sur le miroir ci-dessus ne réfléchit plus que 1% de la lumière incidente.

Le substrat portant sur toute sa surface un miroir multicouches et une couche absorbante uniforme (donc non encore gravée) est appelé "blanc de masque" (en anglais : "mask blank"). Le blanc de masque est gravé selon un motif désiré pour constituer un masque de photolithographie EUV. La petite taille des motifs de masquage à réaliser par la photolithographie EUV fait que des défauts du blanc de masque peuvent engendrer des défauts rédhibitoires de la structure photolithographiée. Des petits défauts de quelques dizaines de nanomètres de dimension sur le masque peuvent se traduire par des motifs indésirables pouvant aboutir à des structures inutilisables.

Les défauts du blanc de masque peuvent provenir de défauts à la surface du blanc de masque, ou encore des défauts introduits pendant la formation des couches multiples du miroir de Bragg, ou enfin des défauts de surface du substrat sous-jacent lui-même, tels que des rayures, des trous, des bosses, défauts qui se propagent dans la structure multicouches et se retrouvent comme des défauts du miroir. Les défauts sont des défauts d'amplitude (zones absorbante qui ne devrait pas l'être ou réciproquement), ou des défauts de phase optique (introduction d'un déphasage intempestif lorsque la lumière de photolithographie pénètre dans les couches du masque, détériorant localement le coefficient de réflexion).

Pour donner un ordre de grandeur : un objectif est de réaliser un masque ayant un nombre de défauts de taille 60 nanomètres ou au-dessus inférieur à 0,01 défaut par cm². Cependant les technologies existantes ne le permettent pas à ce jour.

On a déjà proposé de corriger les défauts de la manière suivante : on réalise une cartographie individuelle des défauts de chaque blanc de masque devant servir à fabriquer la série de masques nécessaires à la production d'une structure (par exemple une tranche semiconductrice portant de multiples circuits de microélectronique). Il faut plusieurs masques correspondant aux différents niveaux de gravure ou implantations à réaliser sur la structure. Les défauts d'une série de blancs de masque sont détectés en utilisant le matériel du commerce, la position et la taille des défauts sur chaque blanc de masque sont notés.

Un logiciel détermine quels blancs de masque sont utilisables pour les différents masques, compte-tenu des schémas d'implantation ou "layout" des différents niveaux du circuit à réaliser, en prévoyant des petits décalages en X ou en Y ou des petites rotations des masques pour que les défauts éventuels des blancs de masque soient déplacés en dehors des dessins de la structure (au moins en dehors des zones les plus critiques des dessins), voir par exemple "EUV mask preparation considering blank defects mitigation", Du Y. et al., Proc. of SPIE vol. 8166.

Dans le cas où le nombre de défauts par masque reste élevé, il est difficile par cette méthode de trouver une solution qui aboutisse à les placer tous dans une zone absorbante, car il y a une faible probabilité pour que les différents défauts d'un masque puissent être localisés tous dans des endroits non critiques alors qu'on ne dispose que de deux degrés de liberté en translation X, Y dans le plan du masque et un degré de liberté en rotation dans ce plan.

Pour mieux éviter la plupart des défauts, l'invention propose un procédé de production d'un jeu de N masques pour la production d'une structure par au moins N opérations de photolithographie, procédé qui comporte les opérations suivantes :
- on produit un jeu de N (N entier supérieur à 1) blancs de masque pouvant avoir des défauts,
- on établit une cartographie individuelle des positions des défauts de chaque blanc de masque à l'aide d'une machine d'inspection,
- on établit une cartographie concaténée des défauts de plusieurs masques en reportant dans une même zone utile commune à tous les masques les positions des défauts relevés par les cartographies des différents blancs de masques,
- on définit des zones de défaut individuelles associées chacune à un défaut respectif et entourant ce défaut,
- en fonction de la structure à réaliser et de règles de dessin, on produit une version électronique des dessins (ou layouts) des N masques, en tenant compte localement, dans les règles de dessin, de l'existence de chaque défaut de la cartographie concaténée, pour interdire de placer des éléments critiques dans des zones de défaut,
- et on produit chacun des masques à partir d'un blanc de masque quelconque et d'un dessin respectif ainsi produit.

En d'autres mots, on inclut dans le logiciel de dessin de masque des règles de dessin qui interdisent de placer des éléments ou au moins certains éléments de circuit critiques dans les zones de défaut du blanc de masque correspondant au masque à réaliser mais aussi dans les zones de défaut des autres blancs de masque. Ces règles de dessin calculent et tracent en tant que de besoin des dessins modifiés qui excluent ou contournent les zones de défaut. Par exemple, on ne fera pas passer un conducteur étroit sur une zone de défaut car il risquerait d'être coupé, mais on lui fera contourner la zone de défaut.

De plus, comme un schéma d'implantation peut être répété à l'identique sur le même masque, par exemple pour faire deux ou quatre puces de circuit intégré, ou plus encore, à partir d'un même jeu de masques, on prévoit de préférence que la cartographie concaténée pour la surface de masque correspondant à une seule puce inclut les positions relatives des défauts des surfaces de blanc de masque correspondant aux autres puces. Il y a alors une double concaténation : concaténation des défauts des différents masques et concaténation des défauts des différentes surfaces répétées à l'identique sur un même masque. Plus généralement, si le jeu de N masques sert à la production, en une seule opération de photolithographie de P structures identiques, la cartographie concaténée pour la surface de masque correspondant à une seule structure inclut les positions relatives des défauts des surfaces de blanc de masque correspondant aux P-1 autres structures.

Enfin, la durée de vie des masques pouvant être limitée, il peut être nécessaire de fabriquer un nouveau jeu de N masques à partir des dessins conçus pour le premier jeu. Dans ce cas, on prévoit à l'avance, au moment de la conception des schémas d'implantation, de faire la cartographie de plusieurs jeux de blancs de masques et de faire une cartographie concaténée des défauts qui inclut non seulement tous les défauts des différents masques d'un jeu mais aussi les défauts des différents blancs de masques d'un ou plusieurs autres jeux. Plus généralement : la cartographie concaténée inclut les défauts d'un nombre de blancs de masque supérieur à N, en vue de la fabrication de masques de remplacement de masques usagés sans modification des dessins de masques élaborés.

On comprend que ce procédé exige que la fabrication des blancs de masque et l'inspection de leurs défauts ait lieu avant la conception des dessins ou layouts des masques, ce qui est contraire à l'habitude.

La modification de dessin liée à la présence d'un défaut peut-être de plusieurs sortes : déplacement d'un bloc de circuit de petite taille vers un emplacement dépourvu de défauts ; déplacement d'éléments de dessins, tout particulièrement des portions de conducteurs, vers un emplacement dépourvu de défauts, et en particulier modification d'un tracé de conducteur pour contourner une zone de défaut ; ou même établissement d'une dérivation de conducteur autour d'une zone de défaut, tout en conservant le tracé original du conducteur qui passe à travers une zone de défaut.

D'autres caractéristiques et avantages de l'invention apparaîtront à la lecture de la description détaillée qui suit et qui est faite en référence aux dessins annexés dans lesquels :
- la figure 1 représente une structure de masque EUV binaire portant un motif de zones absorbantes ;
- la figure 2 représente le blanc de masque réalisé avant production du masque lui-même ;
- la figure 3 représente un défaut détecté à la surface d'un blanc de masque, ainsi que le tracé de conducteurs à réaliser dans une couche conductrice et le tracé réel engendré en tenant compte de la position d'un défaut ;
- la figure 4 représente un exemple de modification de tracé de conducteurs ;
- la figure 5 représente un autre exemple de modification de tracé de conducteurs ;
- la figure 6 représente une cellule de dérivation standard pouvant être utilisée dans les règles de dessin pour tenir compte d'un défaut sur le trajet d'un conducteur.

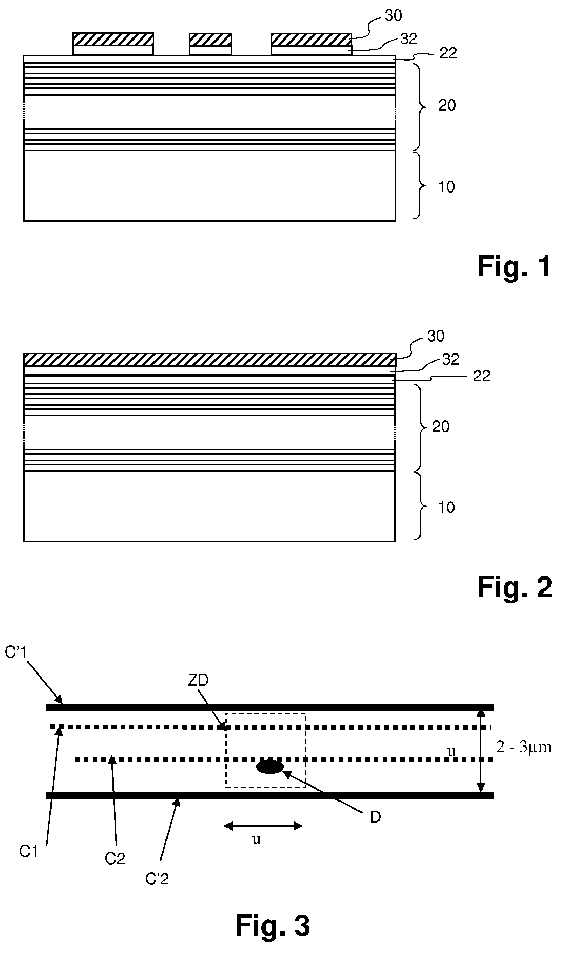

La figure 1 rappelle la structure générale d'un masque binaire de photolithographie en extrême ultraviolet par réflexion.

Le masque comporte un substrat 10 à faible coefficient de dilatation thermique. Il est uniformément recouvert d'un empilement 20 de couches minces formant un miroir de Bragg à la longueur d'onde EUV à laquelle le masque est utilisé et pour l'angle d'incidence (en général environ 6°) de la lumière EUV qui l'éclairera. L'empilement est le plus souvent une alternance de couches de silicium et de molybdène. L'épaisseur des couches de silicium et l'épaisseur des couches de molybdène sont choisies, compte-tenu des indices de réfraction respectifs du silicium et du molybdène, pour établir des interférences constructives de la lumière réfléchie par chaque interface entre deux couches. L'empilement se comporte comme un miroir à fort coefficient de réflexion pour la lumière EUV incidente.

L'empilement 20 est recouvert d'une couche 30, absorbante pour la lumière EUV, gravée localement pour définir un motif de photolithographie désiré. La couche absorbante peut être en chrome. Une couche tampon 32 qui peut être en oxyde de silicium peut être prévue entre l'empilement 20 et la couche absorbante 30. La couche tampon sert notamment de couche d'arrêt de gravure pour permettre de graver le motif désiré dans la couche 30 sans endommager la surface du miroir de Bragg.

En fonctionnement, le masque reçoit une lumière en extrême ultraviolet, notamment à 13,5 nm de longueur d'onde, focalisée par un système optique fonctionnant en général en réflexion. Les zones exposées du miroir renvoient la lumière vers une optique de projection qui la projette sur une structure plane portant une couche à photolithographier. Les zones de miroir recouvertes par la couche absorbante ne renvoient pas de lumière. L'optique de projection projette en général une image réduite dans un rapport quatre.

Avant gravure du motif de photolithographie, l'ensemble du substrat 10, du miroir 20, de la couche tampon 32, et de la couche absorbante uniformément déposée est appelé blanc de masque. Un blanc de masque est représenté à la figure 2. Si la surface du blanc de masque comporte des défauts, ces défauts perturbent la qualité du masque final. Les défauts peuvent être en surface (par exemple un trou dans la couche uniforme 30). Des défauts en profondeur, dans l'empilement 20 ou au-dessous de l'empilement 20 ou sur la surface du substrat, se traduisent par des défauts de phase et peuvent également affecter la qualité du masque. Les défauts ne sont pas réparables, ou difficilement réparables, une fois que le masque est réalisé.

On considère aujourd'hui que des défauts de plus de 60 nanomètres de large sont rédhibitoires et qu'un masque ne devrait pas comporter un taux de défauts de cette dimension supérieur à 0,01 par cm².

Pour réaliser une structure complète, par exemple un circuit intégré de microélectronique comportant des couches semiconductrices, conductrices ou isolantes, gravées selon des motifs respectifs, et comportant des zones semiconductrices dopées selon des motifs respectifs d'implantation, on a besoin d'un jeu de N masques (N>1). Les motifs projetés sur la structure par chacun des N masques se superposent très précisément lors des étapes de photolithographies successives, pour aboutir à la constitution de la structure définitive. Le jeu de masques peut comporter à titre d'exemple de 8 à 15 masques pour les niveaux critiques ; les autres niveaux seront réalisés par exemple par lithographie en ultraviolet lointain (DUV, de l'anglais "Deep UltraViolet"), essentiellement pour des raisons économiques.

Pour éviter de produire des masques défectueux, on inspectait en général la surface des blancs de masque avant de les graver et on éliminait les blancs de masque comportant des défauts.

Selon l'invention, on réalise d'abord une cartographie des défauts de tous les blancs de masque produits pour faire un jeu de N masques servant à la réalisation d'une structure par au moins N (N entier supérieur à 1) opérations de photolithographie EUV. C'est-à-dire qu'on détermine précisément à l'aide d'une machine d'inspection la position exacte de chacun des défauts ayant une dimension supérieure à une valeur donnée (par exemple 30 nanomètres, mais on pourrait descendre au-dessous si on veut plus de sécurité). La position des défauts est repérée en abscisse et en ordonnée par rapport à une zone utile commune à tous les blancs de masque. Cette zone utile est en pratique définie par rapport aux bords du masque, celui-ci étant généralement de forme rectangulaire. Elle peut aussi être repérée par rapport à des marques d'alignement préenregistrées sur le blanc de masque. En d'autres mots, les zones utiles des N masques sont identiques et rigoureusement superposées lors des opérations de photolithographie EUV.

Une cartographie respective des positions de défauts par rapport à la zone utile commune est faite pour chacun des blancs de masques du jeu de N masques. Puis on reporte sur la même zone utile les positions des défauts des N blancs de masque. On établit ainsi dans un même repère et dans une zone utile unique commune à tous les blancs de masque tous les défauts correspondant aux N blancs de masque du jeu. Cela veut dire qu'on établit une cartographie concaténée des positions des défauts des N blancs de masque.

Une zone de défaut est associée à chaque défaut repéré lors de l'inspection. La zone est de préférence rectangulaire. Elle a des dimensions suffisantes pour englober la totalité du défaut en tenant compte de l'erreur de mesure de localisation du défaut. Elle est localisée en abscisse et en ordonnée dans le repère commun. La zone de défaut peut avoir une dimension qui dépend de la taille du défaut observé, mais on peut aussi normaliser à une dimension unique toutes les zones de défaut, quitte à prévoir qu'un défaut de grande taille est représenté par plusieurs zones de défaut accolées.

En fonction de la circuiterie électronique à réaliser, ou de toute autre structure à réaliser par le jeu de N masques, on produit les N dessins de masques nécessaires. Les règles de dessin utilisées pour produire les dessins tiennent compte non seulement de règles de dessin habituelles en matière de conception de microstructures mais aussi de règles d'exclusion ou de contournement spécifiques aux défauts observés. Le principe est d'interdire de placer des éléments de dessin critiques (voire même tout élément de dessin) dans les zones de défaut définies dans la cartographie concaténée. Les éléments critiques sont en pratique tous les éléments à motifs de dessins très fins, pour lesquels un défaut peut détériorer la fonctionnalité de la structure réalisée.

Comme on utilise une cartographie concaténée dans laquelle tous les défauts des N blancs de masque sont reportés dans la même surface utile, on interdira pour un masque donné de placer des éléments de dessin dans une zone de défaut non seulement si le blanc de masque servant à faire ce masque comporte un défaut mais également si le défaut ne vient pas de ce blanc de masque mais d'un autre blanc de masque qui n'est pas destiné à réaliser ce masque.

Le jeu de masques complet peut alors servir à la production de structures par photolithographies successives. Chaque blanc de masque peut être attribué à la réalisation de n'importe lequel du jeu de N masques puisque ses défauts propres seront pris en compte dans le dessin de tous les masques du jeu.

On placera en premier sur le jeu de masques (masques EUV et masques DUV) des blocs de tailles importantes dont on ne veut pas modifier la conception. Un exemple typique est un bloc horloge.

Ensuite, le circuit sera conçu en intégrant dans les règles de dessin les zones de défaut qui doivent être évitées.

La figure 3 représente un défaut D, une zone de défaut ZD qui est ici un carré de côté u entourant le défaut D. Ce carré peut avoir par exemple une dimension de 2 à 3 micromètres de côté. Il définit une zone d'exclusion de dessin.

A titre d'exemple de prise en compte de cette zone d'exclusion : si un des masques du jeu de masques sert à définir un réseau de conducteurs métalliques, on prévoit qu'aucun conducteur ne passe dans la zone ZD. Ici, deux conducteurs C1 et C2 sont représentés et le logiciel de dessin prévoit une interdiction de passage dans la zone ZD, et ceci indépendamment du fait que le défaut ait été identifié sur le blanc de masque qui a servi à préparer le masque de conducteurs métalliques ou sur un autre blanc de masque du même jeu.

En supposant qu'en l'absence de défaut le logiciel de tracé de dessin prévoit un tracé de conducteurs d'origine C1 et C2 (en pointillés), les règles de dessin modifiées prennent en compte la présence de la zone ZD et définissent alors un tracé de remplacement : conducteurs C'1 et C'2 (en traits pleins), plus écartés l'un de l'autre que les conducteurs C1 et C2 et passant de part et d'autre de la zone de défaut ZD.

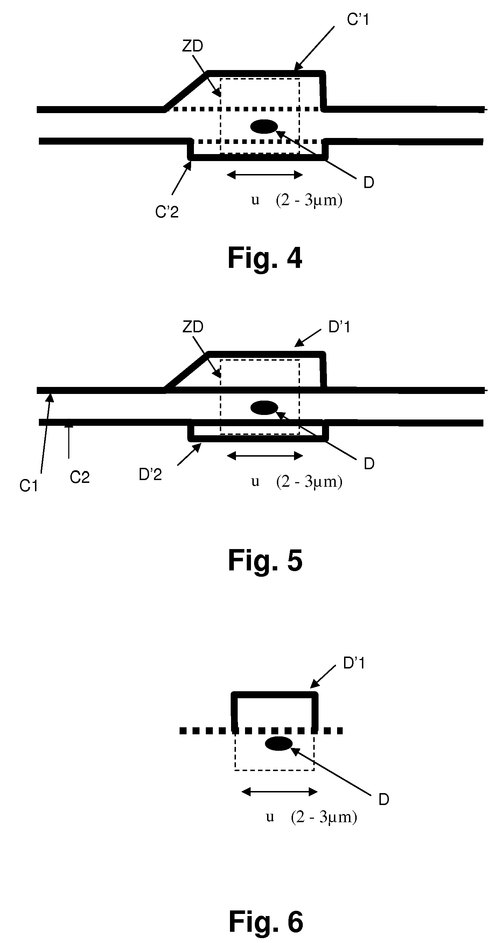

Sur la figure 4, l'exclusion se fait en déviant localement les conducteurs pour qu'ils contournent la zone ZD et reviennent à leur tracé normal (les tracés pointillés représentent le tracé des conducteurs en l'absence de défaut).

La figure 5 représente une variante, applicable au tracé de conducteurs, dans laquelle on conserve le tracé original du conducteur C1, C2 à l'intérieur de la zone de défaut, mais on lui rajoute une dérivation supplémentaire (D'1, D'2) passant hors de la zone de défaut et rétablissant la continuité électrique au cas où le défaut se traduirait par une coupure du conducteur C1, C2. En d'autres mots, la règle de dessin ne modifie pas le tracé mais ajoute un autre tracé de dérivation. Cette règle est applicable principalement ou parfois exclusivement au tracé d'un conducteur.

La dérivation peut être construite comme un conducteur standard en U tel que celui de la figure 6, ayant une longueur u de quelques micromètres entre les branches du U, et dont on vient appliquer les extrémités sur le conducteur qui risque de rencontrer un défaut. La règle de dessin est alors l'ajout d'une dérivation standard autour du défaut.

Les règles de dessin de masques incluront donc de préférence des cellules d'exclusion et des cellules de dérivation standard.

Dans la conception du dessin des circuits intégrés, on sait qu'on utilise le plus souvent des blocs élémentaires prélevés dans une bibliothèque. Par exemple, une horloge sera dessinée à l'aide de N jeux de masques issus d'une bibliothèque. De préférence, en cas de défaut situé dans la zone où on aurait pu mettre une horloge, on ne redessinera pas en détail les dessins de masque définissant l'horloge mais on déplacera globalement le bloc en dehors des différentes zones de défaut déterminées à partir de l'inspection visuelle des blancs de masque. Cette solution est plus simple pour les petits blocs fonctionnels. Pour des plus gros blocs on préférera redessiner l'intérieur du bloc en évitant les zones de défaut.

Compte-tenu de la petite taille des zones d'exclusion (inférieure à 10 micromètres carrés), on saura en général placer les blocs de manière à ne pas empiéter sur les zones d'exclusion.

Dans ce qui précède, on a considéré qu'on regroupe tous les défauts de tous les blancs de masque qui vont servir à réaliser un jeu de masques complet pour la réalisation d'une structure, par exemple un circuit de microélectronique. Toutefois, on pourrait considérer que le jeu de masques comprend N masques critiques (du point de vue de la finesse des motifs) et d'autres masques moins critiques, par exemple des masques de formation de zones d'oxyde isolant ou des masques d'implantation de caissons dopés. Dans ce cas, on peut prévoir qu'on regroupe les défauts des N blancs de masque critiques, sans prendre en compte les défauts des masques moins critiques. Mais cela suppose bien sûr qu'on affecte aux opérations moins critiques les blancs de masque dont on n'a pas identifié et regroupé les défauts. Les autres blancs de masque n'ont pas besoin d'être affectés à tel ou tel masque puisqu'on concatène tous leurs défauts.

On peut également considérer que la durée de vie des masques est plus courte que la durée de fabrication des structures, ce qui veut dire qu'on peut avoir besoin de fabriquer à nouveau des masques de remplacement de masques usagés. Dans ce cas, on peut prévoir de fabriquer à l'avance des blancs de masques de remplacement et de relever leurs défauts pour les regrouper avec ceux du jeu de masques initial. La conception des dessins de masques tiendra compte non seulement des défauts des blancs de masque du jeu initial, mais aussi des défauts des blancs de masque du ou des jeux supplémentaires et des jeux de remplacement en cas d'usure ou de casse éventuelle. Avec cette précaution, on n'aura pas besoin de redessiner les masques en fonction des défauts des nouveaux blancs de masque. Quel que soit le masque à remplacer, il pourra être fait à partir de l'un des blancs de masques supplémentaires mis en réserve.

Enfin, il est possible qu'un même masque contienne les dessins de plusieurs puces de circuit intégré identiques, par exemple quatre puces. Dans ce cas, on a avantage à utiliser le même dessin de masque pour toutes les puces plutôt que de concevoir quatre dessins de puces qui seraient légèrement différents les uns des autres à cause des contournements et exclusions résultant des défauts constatés. On regroupera alors dans une zone utile commune correspondant à une seule puce tous les défauts constatés dans les surfaces correspondant aux autres puces du même masque. Le logiciel de dessin de masque tiendra compte de tous les défauts correspondant aux différentes zones du blanc de masque ramenés dans la surface correspondant à une puce. Ainsi, le dessin corrigé par les zones d'exclusion pourra servir indifféremment pour n'importe laquelle des puces bien que les zones de défaut évitées dans le dessin n'aient pas forcément pour origine un défaut de blanc de masque situé dans la zone de puce correspondante.

Si on donne un exemple numérique : supposons qu'il y a N=10 niveaux de masque critiques, chaque blanc de masque contenant environ 100 défauts. Cela conduit à 1000 zones de défaut à éviter. On peut considérer que les défauts sont de quelques dizaines de nanomètres à 200 nanomètres environ. En adoptant une exclusion de 1 micromètre de chaque côté du défaut, soit une surface de 4 micromètres carrés, on va devoir exclure environ 4000 micromètres carrés. Les dimensions du masque sont en général d'au moins 10cm par 10cm. La surface exclue du dessin est donc négligeable. Si maintenant on met 10 puces par masque et qu'on regroupe dans une même zone de puce les défauts correspondant aux autres zones de puces, la surface exclue devient plutôt de 40 micromètres carrés mais reste de l'ordre de 0,0002% de la surface totale donc extrêmement faible. Et si on regroupe les défauts d'une dizaine de jeux de blancs de masque, en vue du remplacement futur des masques, on ne dépasse pas 0,002% pour la surface exclue du dessin, ce qui est très faible.

## Revendications

1. Procédé de production d'un jeu de N masques pour la production d'une structure par au moins N opérations de photolithographie, procédé qui comporte les opérations suivantes :
- on produit un jeu de N, N entier supérieur à 1, blancs de masque pouvant avoir des défauts,
- on établit une cartographie individuelle des positions des défauts (D) de chaque blanc de masque à l'aide d'une machine d'inspection,
- on établit une cartographie concaténée des défauts de plusieurs masques en reportant dans une même zone utile commune à tous les masques les positions des défauts relevés par les cartographies des différents blancs de masques,
- on définit des zones de défaut individuelles (ZD) associées chacune à un défaut respectif et entourant ce défaut,
- en fonction de la structure à réaliser et de règles de dessin, on produit une version électronique des dessins des N masques, en tenant compte localement, dans les règles de dessin, de l'existence de chaque défaut de la cartographie concaténée, pour interdire de placer des éléments critiques dans des zones de défaut,
- et on produit chacun des masques à partir d'un blanc de masque quelconque et d'un dessin respectif ainsi produit.

2. Procédé selon la revendication 1, **caractérisé en ce que** le jeu de N masques sert à la production en une opération de P structures identiques, et la cartographie concaténée pour la surface de masque correspondant à une seule structure inclut les positions relatives des défauts des surfaces de blanc de masque correspondant aux P-1 autres structures.

3. Procédé selon l'une des revendications 1 et 2, **caractérisé en ce que** la cartographie concaténée inclut les défauts d'un nombre de blancs de masque supérieur à N, en vue de la fabrication de masques de remplacement de masques usagés sans modification des dessins de masques élaborés.

4. Procédé selon l'une des revendications 1 à 3, **caractérisé en ce que** la modification de dessin liée à la présence d'un défaut est un déplacement d'un bloc de circuit vers un emplacement situé en dehors des zones de défaut.

5. Procédé selon l'une des revendications 1 à 3, **caractérisé en ce que** la modification de dessin liée à la présence d'un défaut est un remplacement d'un tracé traversant une zone de défaut par un tracé contournant la zone de défaut.

6. Procédé selon l'une des revendications 1 à 3, **caractérisé en ce que** la modification de dessin liée à la présence d'un défaut est l'ajout d'une dérivation ne traversant pas la zone associée au défaut, sans suppression d'un tracé traversant la zone associée au défaut.

## Patentansprüche

1. Verfahren zum Erzeugen eines Satzes von N Masken zum Erzeugen einer Struktur mittels wenigstens N Fotolithografievorgängen, wobei das Verfahren die folgenden Schritte beinhaltet:
- Erzeugen eines Satzes von N Maskenrohlingen, wobei N eine ganze Zahl größer als 1 ist, die Defekte haben können;
- Erstellen einer individuellen Karte der Positionen der Defekte (D) jedes Maskenrohlings mittels einer Inspektionsmaschine;
- Erstellen einer verketteten Karte der Defekte von mehreren Masken durch Übertragen zu derselben, allen Masken gemeinsamen nützlichen Zone der Positionen der durch das Kartieren der verschiedenen Maskenrohlinge erfasste Defekte;
- Definieren individueller Defektzonen (ZD), die jeweils mit einem jeweiligen Defekt assoziiert sind und diesen Defekt umringen;
- Erzeugen, in Abhängigkeit von der zu produzierenden Struktur und von Design-Regeln, einer elektronischen Version der Layouts der N Masken unter lokaler Berücksichtigung, in den Design-Regeln, der Existenz jedes Defekts der verketteten Karte, um die Platzierung von kritischen Elementen in Defektzonen zu untersagen; und
- Erzeugen jeder der Masken auf Basis eines beliebigen Maskenrohlings und eines jeweiligen so erzeugten Layouts.

2. Verfahren nach Anspruch 1, **dadurch gekennzeichnet, dass** der Satz von N Masken zum Erzeugen, in einem Vorgang, von P identischen Strukturen benutzt wird und die verkettete Karte für die Maskenoberfläche entsprechend einer einzigen Struktur die relativen Positionen der Defekte der Maskenrohlingoberflächen entsprechend den P-1 anderen Strukturen enthält.

3. Verfahren nach einem der Ansprüche 1 und 2, **dadurch gekennzeichnet, dass** die verkettete Karte die Defekte einer Anzahl von Maskenrohlingen beinhaltet, die größer ist als N, im Hinblick auf die Herstellung von Masken zum Ersetzen von benutzten Masken, ohne die Layouts von ausgearbeiteten Masken zu modifizieren.

4. Verfahren nach einem der Ansprüche 1 bis 3, **dadurch gekennzeichnet, dass** die mit der Anwesenheit eines Defekts verbundene Layout-Modifikation das Verlegen eines Schaltungsblocks zu einem Ort außerhalb der Defektzonen beinhaltet.

5. Verfahren nach einem der Ansprüche 1 bis 3, **dadurch gekennzeichnet**, das die Layout-Modifikation in Verbindung mit der Anwesenheit eines Defekts das Ersetzen einer durch eine defekte Zone verlaufenden Linie durch eine die defekte Zone umgehende Linie ist.

6. Verfahren nach einem der Ansprüche 1 bis 3, **dadurch gekennzeichnet, dass** die Layout-Modifikation in Verbindung mit der Anwesenheit eines Defekts das Hinzufügen einer Umleitung ist, die nicht durch die mit dem Defekt assoziierte Zone verläuft, ohne eine Linie zu entfernen, die durch die mit dem Defekt assoziierte Zone verläuft.

## Claims

1. A method for producing a set of N masks for producing a structure by means of at least N photolithography operations, which method comprises the following steps:
- producing a set of N, with N being an integer higher than 1, mask blanks that may have defects;
- generating an individual map of the positions of the defects (D) of each mask blank using an inspection machine;
- generating a concatenated map of the defects of a plurality of masks by transferring, to the same useful zone common to all of the masks, the positions of the defects detected by mapping the various mask blanks;
- defining individual defect zones (ZD) each associated with a respective defect and surrounding said defect;
- producing, as a function of the structure to be produced and of design rules, an electronic version of the layouts of the N masks, whilst locally taking into account, in the design rules, the existence of each defect of said concatenated map in order to prevent the placement of critical elements in defect zones; and
- producing each of the masks on the basis of any mask blank and of a respective layout thus produced.

2. The method according to claim 1, **characterised in that** said set of N masks is used to produce P identical structures in a single operation, and the concatenated map for the mask surface that corresponds to a single structure includes the relative positions of the defects of the mask blank surfaces that correspond to the P-1 other structures.

3. The method according to any one of claims 1 and 2, **characterised in that** said concatenated map includes the defects of a number of mask blanks that is higher than N, with a view to manufacturing masks for replacing used masks without modifying the layouts of the generated masks.

4. The method according to any one of claims 1 to 3, **characterised in that** the layout modification that is associated with the presence of a defect consists in transferring a circuit block to a location outside of the defect zones.

5. The method according to any one of claims 1 to 3, **characterised in that** the layout modification that is associated with the presence of a defect consists in replacing a line passing through a defect zone with a line bypassing the defect zone.

6. The method according to any one of claims 1 to 3, **characterised in that** the layout modification that is associated with the presence of a defect consists in adding a bypass that does not pass through the zone associated with the defect without removing a line passing through the zone associated with the defect.
